(19) Europäisches Patentamt
European Patent Office
Office européen des brevets

(11) **EP 4 502 957 A1**

(12) **EUROPEAN PATENT APPLICATION**
published in accordance with Art. 153(4) EPC

(43) Date of publication:
**05.02.2025 Bulletin 2025/06**

(21) Application number: **23774608.6**

(22) Date of filing: **10.03.2023**

(51) International Patent Classification (IPC):
*G06T 19/00* (2011.01)    *G06T 13/20* (2011.01)
*G06T 13/40* (2011.01)    *H04S 1/00* (2006.01)

(52) Cooperative Patent Classification (CPC):
**G06T 13/20; G06T 13/40; G06T 19/00; H04S 1/00**

(86) International application number:
**PCT/JP2023/009400**

(87) International publication number:
**WO 2023/182009 (28.09.2023 Gazette 2023/39)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **24.03.2022 JP 2022047792**

(71) Applicant: **Yamaha Corporation
Hamamatsu-shi, Shizuoka 430-8650 (JP)**

(72) Inventors:
• **ISHIKAWA, Katsumi
Hamamatsu-shi, Shizuoka 430-8650 (JP)**
• **NOTO, Kentaro
Hamamatsu-shi, Shizuoka 430-8650 (JP)**
• **OHTANI, Akio
Hamamatsu-shi, Shizuoka 430-8650 (JP)**

(74) Representative: **Schmidbauer, Andreas Konrad
Wagner & Geyer Partnerschaft mbB
Patent- und Rechtsanwälte
Gewürzmühlstrasse 5
80538 München (DE)**

(54) **VIDEO PROCESSING METHOD AND VIDEO PROCESSING DEVICE**

(57) A video processing method places an object in a three-dimensional space and outputs a video of a live event as viewed from a viewpoint position set in the three-dimensional space. The video processing method sets a first viewpoint position based on a first factor being a factor related to the object, outputs the video of the live event as viewed from the first viewpoint position, receives a second factor being a factor related to a sound of the live event, calculates a relative position to the object according to the second factor, changes the first viewpoint position to a second viewpoint position based on the calculated relative position, and outputs the video of the live event as viewed from the second viewpoint position.

FIG.4

```
                 START
                   │
                   ▼            S11
   ┌──────────────────────────────────────┐
   │ RECEIVE FIRST FACTOR BEING FACTOR     │
   │ RELATED TO OBJECT                     │
   └──────────────────────────────────────┘
                   │            S12
                   ▼
   ┌──────────────────────────────────────┐
   │ SET FIRST VIEWPOINT POSITION BASED    │
   │ ON FIRST FACTOR                       │
   └──────────────────────────────────────┘
                   │            S13
                   ▼
   ┌──────────────────────────────────────┐
   │ OUTPUT VIDEO OF LIVE EVENT AS VIEWED  │◄───┐
   │ FROM FIRST VIEWPOINT POSITION         │    │
   └──────────────────────────────────────┘    │
                   │            S14             │
                   ▼                       NO   │
            ◇ RECEIVE SECOND FACTOR? ───────────┘
                   │ YES
                   ▼            S15
   ┌──────────────────────────────────────┐
   │ OBTAIN RELATIVE POSITION TO OBJECT    │
   │ BASED ON SECOND FACTOR AND SET        │
   │ SECOND VIEWPOINT POSITION             │
   └──────────────────────────────────────┘
                   │            S16
                   ▼
   ┌──────────────────────────────────────┐
   │ OUTPUT VIDEO OF LIVE EVENT AS VIEWED  │
   │ FROM SECOND VIEWPOINT POSITION        │
   └──────────────────────────────────────┘
                   │
                   ▼
                  END
```

EP 4 502 957 A1

**Description**

Technical Field

An embodiment of the present invention relates to a video processing method and a video processing apparatus.

Background Art

An information processing apparatus of Patent Literature 1 that displays a virtual viewpoint video discloses a configuration in which a relation condition for regulating a positional relationship between attention objects, and information on two or more objects among objects present in a viewpoint-dimensional space for regulating the predetermined viewpoint associated with the relation condition are included as a viewpoint change requirement, and a viewpoint is changed when the relation condition is satisfied and the viewpoint change requirement is established.

Citation List

Patent Literature

Patent Literature 1: Japanese Unexamined Patent Application Publication No. 2020-190978

Summary of Invention

Technical Problem

The information processing apparatus of Patent Literature 1 does not change a viewpoint position according to a factor of a change in a sound, such as a change in a venue of a live event.
An embodiment of the present invention is directed to provide a video processing method to change a viewpoint position automatically according to the factor of a change in a sound in the live event and to achieve a meaningful change in the viewpoint position as the live event.

Solution to Problem

A video processing method according to an embodiment of the present invention places an object in a three-dimensional space and outputs a video of a live event as viewed from a viewpoint position set in the three-dimensional space. The video processing method sets a first viewpoint position based on a first factor being a factor related to the object, outputs the video of the live event as viewed from the first viewpoint position, receives a second factor being a factor related to a sound of the live event, calculates a relative position to the object according to the second factor, changes the first viewpoint position to a second viewpoint position based on the calculated relative position, and outputs the video of the live event as viewed from the second viewpoint position.

Advantageous Effects of Invention

According to an embodiment of the present invention, a meaningful change in a viewpoint position as a live event is able to be achieved.

Brief Description of Drawings

[FIG. 1] is a block diagram showing a configuration of a video processing apparatus 1.
[FIG. 2] is a view showing a three-dimensional space R1.
[FIG. 3] is a view showing an example of a video of a live event as viewed from a viewpoint position set in the three-dimensional space R1.
[FIG. 4] is a flowchart showing an operation of a processor 12.
[FIG. 5] is a perspective view showing an example of a three-dimensional space R2 that is a different live venue.
[FIG. 6] is a view showing an example of a video of the live event as viewed from a viewpoint position set in the three-dimensional space R2.
[FIG. 7] is a view illustrating a concept of coordinate transformation.

[FIG. 8] is a view illustrating a concept of the coordinate transformation.

[FIG. 9] is a view illustrating a modification of the coordinate transformation.

[FIG. 10] is a flowchart showing the operation of the processor 12 in a case of performing acoustic processing using a first viewpoint position 50A and a second viewpoint position 50B as a listening point.

[FIG. 11] is a perspective view showing an example of a three-dimensional space R1 according to Modification 1.

[FIG. 12] is a view showing an example of a video of the live event as viewed from a second viewpoint position 50B according to Modification 1.

[FIG. 13] is a perspective view showing an example of a three-dimensional space R1 according to Modification 4.

[FIG. 14] is a perspective view showing an example of the three-dimensional space R1 according to Modification 4.

Description of Embodiments

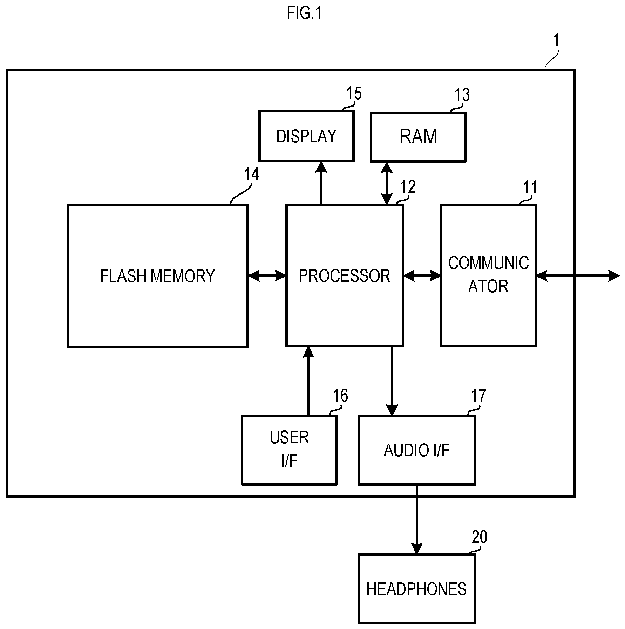

FIG. 1 is a block diagram showing a configuration of a video processing apparatus 1. The video processing apparatus 1 includes a communicator 11, a processor 12, a RAM 13, a flash memory 14, a display 15, a user I/F 16, and an audio I/F 17.

The video processing apparatus 1 includes a personal computer, a smartphone, a tablet computer, or the like.

The communicator 11 communicates with a different apparatus such as a server. The communicator 11 has a wireless communication function such as Bluetooth (registered trademark) or Wi-Fi (registered trademark), for example, and a wired communication function such as a USB or a LAN.

The display 15 includes an LCD, an OLED, or the like. The display 15 displays a video that the processor 12 has outputted.

The user I/F 16 is an example of an operator. The user I/F 16 includes a mouse, a keyboard, a touch panel, or the like. The user I/F 16 receives an operation of a user. It is to be noted that the touch panel may be stacked on the display 15.

The audio I/F 17 has an analog audio terminal, a digital audio terminal, or the like and connects an acoustic device. In the present embodiment, the audio I/F 17 connects headphones 20 as an example of the acoustic device and outputs an audio signal to the headphones 20.

The processor 12 includes a CPU, a DSP, or an SoC (System on a Chip) and corresponds to the processor of the present invention. The processor 12 reads out a program from the flash memory 14 being a storage medium, temporarily stores the program in the RAM 13, and thus performs various operations. It is to be noted that the program does not need to be stored in the flash memory 14. The processor 12, for example, may download the program from the different apparatus such as a server and may temporarily store the program in the RAM 13, when necessary.

The processor 12 obtains data related to a live event through the communicator 11. The data related to a live event includes space information, model data of an object, position information on an object, motion data of an object, and audio data of a live event.

The space information is information that shows a shape of a three-dimensional space corresponding to a live venue such as a live music club or a concert hall, for example, and is indicated by a three-dimensional coordinate of which the origin is located at a certain position. The space information may be coordinate information based on 3DCAD data of a live venue such as a real concert hall or may be logical coordinate information on a certain unreal live venue (information normalized by 0 to 1).

The model data of an object is three-dimensional CG image data and includes a plurality of image parts.

The position information on an object is information that shows a position of the object in the three-dimensional space. The position information on an object according to the present embodiment is indicated by a time-series three-dimensional coordinate according to time elapsed from the start time of a live event. The object may be an object that, like a device such as a speaker, does not change the position from the start to the end of the live event or may be an object that, like a performer, changes the position along the time sequence.

The motion data of the object is data showing a placement relationship of the plurality of image parts for moving the model data, and the motion data according to the present embodiment is time-series data according to the time elapsed from the start time of the live event. The motion data is set to the object that, like a performer, changes the position along the time sequence.

The audio data of the live event includes an audio signal of a stereo (L, R) channel, for example. The processor 12 reproduces the audio data of the live event and outputs the audio data to the headphones 20 through the audio I/F 17. The processor 12 may perform effect processing such as reverb processing on the audio signal. The reverb processing is processing to simulate reverberation (a reflected sound) of a certain room by adding a predetermined delay time to a received audio signal and generating a level-adjusted pseudo reflected sound. The processor 12 performs effect processing suitable for a live venue. For example, in a case in which the live venue shown in the space information is a small venue, the processor 12 generates a low-level pseudo reflected sound with short delay time and reverberation time. In contrast, in a case in which the live venue shown in the space information is a large venue, the processor 12 generates a high-level pseudo reflected sound with long delay time and reverberation time.

In addition, the audio data of the live event may include an audio signal associated with each object that emits a sound. For example, speaker objects 53 and 54 are objects that emit a sound. The processor 12 may perform localization processing such that the sound of the speaker objects 53 and 54 may be localized in the positions of the speaker objects 53 and 54 and may generate the audio signal of the stereo (L, R) channel for outputting to the headphones 20. The details of the localization processing will be described below.

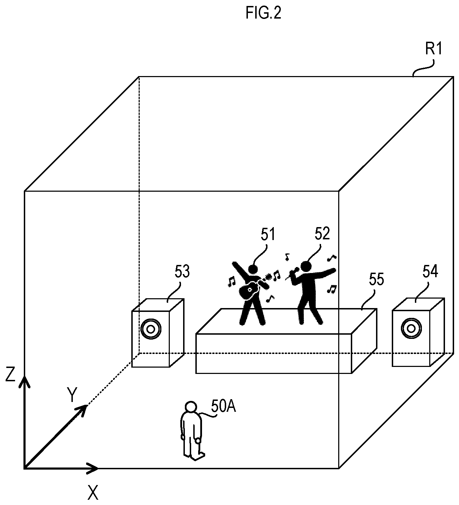

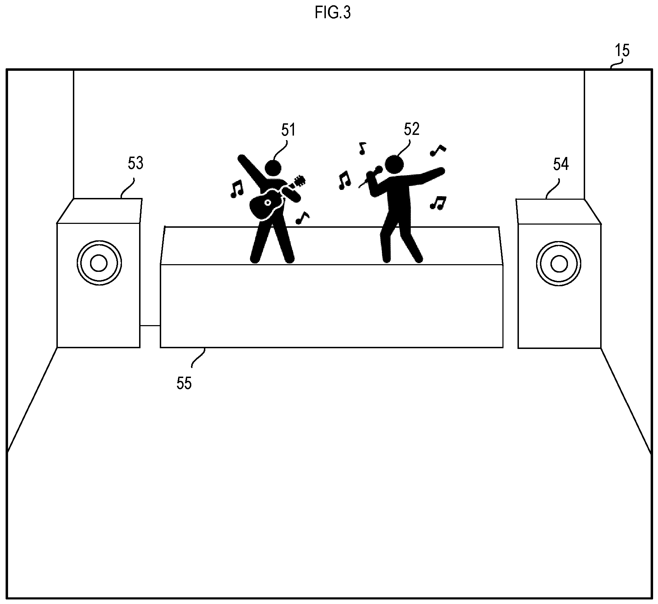

The processor 12 places an object in a three-dimensional space R1 as shown in FIG. 2, based on the position information on an object among the data related to a live event. In addition, the processor 12 sets a viewpoint position in the three-dimensional space R1. The processor 12 performs rendering of a 3DCG image of each object, based on the space information, the model data of an object, the position information on an object, the motion data of an object, and the information on the set viewpoint position, and generates a video (see FIG. 3) of the live event as viewed from the set viewpoint position.

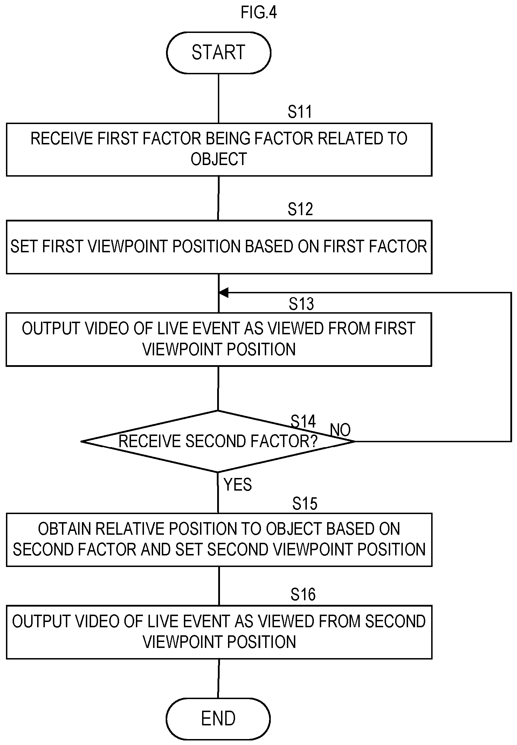

FIG. 2 is a perspective view showing an example of the three-dimensional space R1. FIG. 3 is a view showing an example of a video of the live event as viewed from the viewpoint position set in the three-dimensional space R1. FIG. 4 is a flowchart showing an operation of the processor 12. The operation of FIG. 4 is executed by an application program that the processor 12 reads out from the flash memory 14.

The three-dimensional space R1 of FIG. 2 shows a space of a rectangular parallelepiped shape as an example. The processor 12 places a performer object 51, a performer object 52, a speaker object 53, a speaker object 54, and a stage object 55 in the three-dimensional space R1. The performer object 51 is an object of a guitarist. The performer object 52 is an object of a singer.

The processor 12 places the stage object 55 in the center in a left-right direction (an X direction), in the rearmost in a front-rear direction (a Y direction), and at the lowest position in a height direction (a Z direction) of the three-dimensional space R1. In addition, the processor 12 places the speaker object 54 in the leftmost in the left-right direction (the X direction), at the most rear in the front-rear direction (the Y direction), and at the lowest position in the height direction (the Z direction) of the three-dimensional space R1. In addition, the processor 12 places the speaker object 53 in the rightmost in the left-right direction (the X direction), in the rearmost in the front-rear direction (the Y direction), and at the lowest position in the height direction (the Z direction) of the three-dimensional space R1.

In addition, the processor 12 places the performer object 51 on a left side in the left-right direction (the X direction), in the rearmost in the front-rear direction (the Y direction), and on the stage object 55 in the height direction (the Z direction) of the three-dimensional space R1. In addition, the processor 12 places the performer object 52 on a right side in the left-right direction (the X direction), in the rearmost in the front-rear direction (the Y direction), and on the stage object 55 in the height direction (the Z direction) of the three-dimensional space R1.

Then, the processor 12 receives a first factor being a factor related to an object (S11) and sets a first viewpoint position 50A based on the first factor (S12). For example, the first factor is a factor related to the stage object 55. The processor 12 receives the designation of "a front position away from the stage object 55 by a predetermined distance" as the first factor in the first processing of starting the application program.

Alternatively, a user may designate a specific object through the user I/F 16. For example, the processor 12 displays a schematic view of the three-dimensional space R1 of FIG. 2 on the display 15 and displays various objects. The user designates any object, for example, through the touch panel or the like. For example, when the user designates the stage object 55, the processor 12 sets the first viewpoint position 50A at a front position away from the stage object 55 by a predetermined distance.

The first viewpoint position 50A set as described above corresponds to a position of the user who views and listens to content, in the three-dimensional space R1. The processor 12 outputs the video of the live event as viewed from the first viewpoint position 50A as shown in FIG. 3 (S13). The video as viewed from the first viewpoint position 50A set at "the front position away from the stage object 55 by a predetermined distance," as shown in FIG. 3, is a video such that all performers at the live event may be captured.

It is to be noted that the video may be outputted and displayed on the display 15 of the own apparatus or may be outputted to the different apparatus through the communicator 11.

Next, the processor 12 determines whether or not to have received the second factor being a factor related to the sound of the live event (S14). For example, the user performs an operation of changing the present live venue to a different live venue, through the user I/F 16.

The processor 12, until determining to have received the second factor in determination of S14, repeats the processing to output the video based on the first viewpoint position (S14: NO -> S13). As described above, the position information and motion data of an object are time-series data according to the time elapsed from the start time of the live event. Therefore, according to the lapse of the live event, the performer object 51 and the performer object 52 change the position or the motion.

The second factor related to the sound of the live event is a change in the live venue, for example. As described above, the processor 12 generates a pseudo reflected sound according to the size of the live venue shown in the space information. Therefore, as the live venue is changed, the sound of the live event also changes. Therefore, the change in the live venue is a factor related to the sound of the live event.

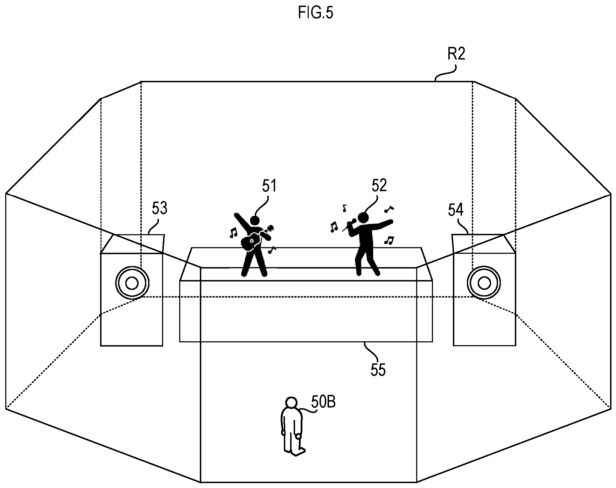

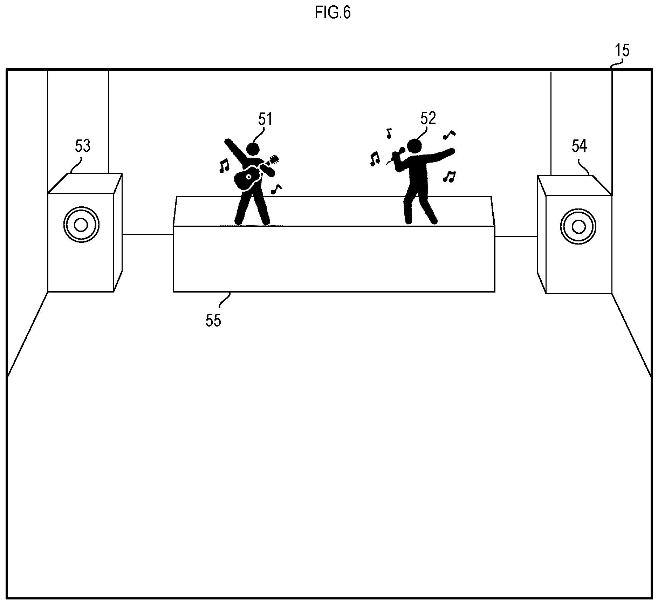

FIG. 5 is a perspective view showing an example of a three-dimensional space R2 that is a live venue different from the three-dimensional space R1. FIG. 6 is a view showing an example of a video of the live event as viewed from a viewpoint position set in the three-dimensional space R2.

The three-dimensional space R2 of FIG. 5 shows a space of an octagonal prism as an example. In addition, the three-dimensional space R2 is a space larger than the three-dimensional space R1. The user changes the live venue from the three-dimensional space R1 to the three-dimensional space R2 through the user I/F 16.

The processor 12, when receiving the operation to change from the three-dimensional space R1 to the three-dimensional space R2 in the determination of S14 (S14: YES), calculates a relative position to a certain object (the stage object 55 in the above example) and changes the first viewpoint position 50A to the second viewpoint position 50B based on the calculated relative position (S15).

Specifically, the processor 12 first obtains coordinates of the performer object 51, the performer object 52, the speaker object 53, the speaker object 54, and the stage object 55 in the three-dimensional space R2.

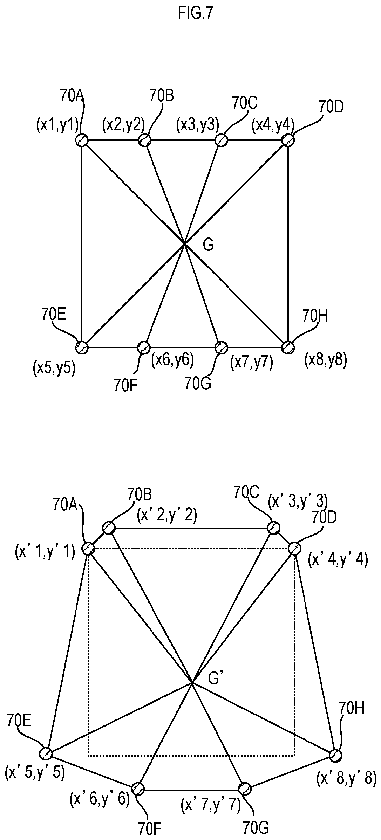

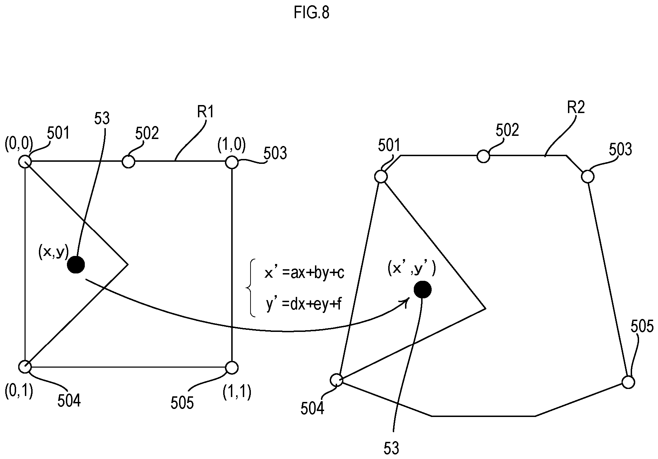

FIG. 7 and FIG. 8 are diagrams illustrating a concept of coordinate transformation. FIG. 7 and FIG. 8 show an example that transforms the coordinates of the speaker object 53 from the three-dimensional space R1 to the three-dimensional space R2, as an example. However, in order to make the description easy, FIG. 7 and FIG. 8 show a two-dimensional space in a plan view of the three-dimensional space R1 and the three-dimensional space R2.

The processor 12 transforms the coordinates of the speaker object 53 from the first coordinates in the three-dimensional space R1 to the second coordinates in the three-dimensional space R2. In the example shown by FIG. 7, eight reference points before transformation are 70A($x_1$, $y_1$), 70B($x_2$, $y_2$), 70C ($x_3$, $y_3$), 70D ($x_4$, $y_4$), 70E ($x_5$, $y_5$), 70F ($x_6$, $y_6$), 70G ($x_7$, $y_7$), and 70H($x_8$, $y_8$), and eight reference points after transformation are 70A($x'_1$, $y'_1$), 70B($x'_2$, $y'_2$), 70C($x'_3$, $y'_3$), 70D($x'_4$, $y'_4$), 70E($x'_5$, $y'_5$), 70F($x'_6$, $y'_6$), 70G($x'_7$, $y'_7$), and 70H($x'_8$, $y'_8$).

The processor 12 obtains a centroid G of the eight reference points before transformation and a centroid G' of the eight reference points after transformation, and then generates triangular meshes by using these centroids as centers.

The processor 12 transforms an internal space of a triangle before transformation and an internal space of a triangle after transformation by a predetermined coordinate transformation. The transformation uses an affine transformation, for example. The affine transformation is an example of a geometric transformation. The affine transformation expresses an x coordinate (x') and a y coordinate (y') after transformation as a function of the x coordinate (x) and the y coordinate (y) before transformation, respectively. In other words, the affine transformation performs the coordinate transformation by the following equations: $x' = ax + by + c$ and $y' = dx + ey + f$. The coordinates of the three apexes of the triangle before transformation and the coordinates of the three apexes of the triangle after transformation are able to uniquely obtain coefficients a to f. The processor 12 transforms the first coordinates into the second coordinates by similarly obtaining an affine transformation coefficient for all the triangles. It is to be noted that the coefficients a to f may be obtained by the least-squares method.

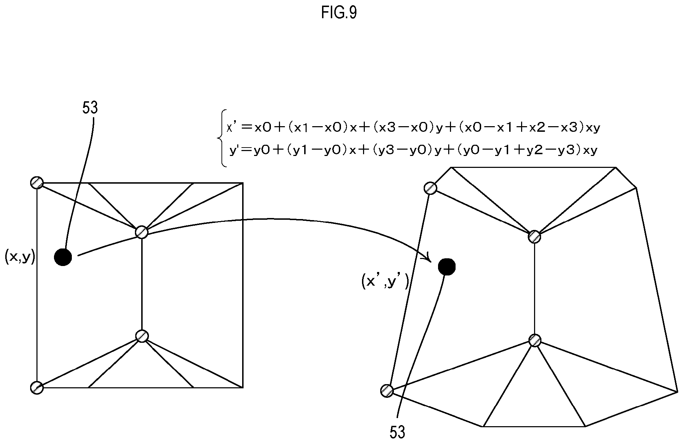

It is to be noted that the meshes may be meshes of any other polygonal shape other than a triangle, or a combination of the polygonal shape. For example, the processor 12, as shown in FIG. 9, may generate quadrangular meshes and may perform coordinate transformation. A transformation method is not limited to the affine transformation. For example, processor 12 may transform each of the quadrangular meshes based on the following equations and may perform coordinate transformation (However, x0, y0, x1, y1, x2, and y2, x3 and y3 are the coordinates of transformation points, respectively).

$$x' = x0 + (x1-x0)x + (x3-x0)y + (x0-x1+x2-x3)xy$$

$$y' = y0 + (y1-y0)x + (y3-y0)y + (y0-y1+y2-y3)xy$$

The transformation method may be any other geometric transformation such as isometric mapping, homothetic transformation, or projective transformation. For example, the projective transformation may be expressed by the following equations: $x' = (ax+by+c)/(gx+hy+1)$; and $y' = (dx+ey+f)/(gx+hy+1)$. The coefficients are obtained in the same way as in a case of the above affine transformation. For example, the eight coefficients (a to h) that configure the quadrangular projective transformation are uniquely obtained by a set of eight simultaneous equations. Alternatively, the coefficients may be obtained by the least-squares method.

Although the above example shows the coordinate transformation in the two-dimensional space (X, Y), the coordinate in the three-dimensional space (X, Y, Z) is also transformable by the same method.

Accordingly, each object is transformed into the coordinates according to the shape of the three-dimensional space R2.

In addition, in this example, the processor 12 also transforms the coordinates of the first viewpoint position 50A based on the above transformation method. Accordingly, the processor 12 obtains the second viewpoint position 50B being a relative position to the stage object 55 in the three-dimensional space R2.

Then, the processor 12 outputs a video of the live event as viewed from the second viewpoint position 50B as shown in FIG. 5 (S16). In this example, the video as viewed from the second viewpoint position 50B, as shown in FIG. 6, is a video such that all performers at the live event may be captured.

However, the coordinates of the performer object 51, the performer object 52, the speaker object 53, the speaker object 54 and the stage object 55 are transformed according to the change in the live venue. Therefore, respective objects are placed at positions away from each other, according to the three-dimensional space R2 larger than the three-dimensional space R1.

In this way, the video processing apparatus 1 according to the present embodiment is able to change a viewpoint position automatically according to the factor of a change in a sound in the live event and to achieve a meaningful change in the viewpoint position as the live event.

(Acoustic Processing)

The processor 12 obtains an audio signal according to a live event and performs acoustic processing on the obtained audio signal. The processor 12, in a case in which a live venue is changed, generates a reflected sound according to the changed live venue. For example, the processor 12 generates a high-level pseudo reflected sound with long delay time and reverberation time according to the three-dimensional space R2 larger than the three-dimensional space R1.

The processor 12 may perform acoustic processing using the first viewpoint position 50A and the second viewpoint position 50B as a listening point. The acoustic processing using the first viewpoint position 50A and the second viewpoint position 50B as the listening point is localization processing described above, for example.

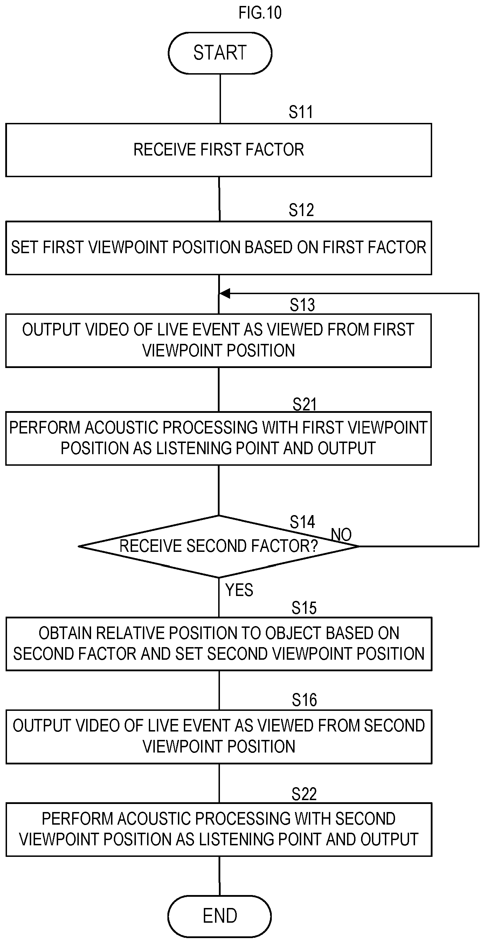

FIG. 10 is a flowchart showing the operation of the processor 12 in a case of performing the acoustic processing using the first viewpoint position 50A and the second viewpoint position 50B as a listening point. The same reference numerals are used to refer to components common to FIG. 4, and the description will be omitted.

The processor 12, when outputting the video of the live event as viewed from the first viewpoint position 50A, performs localization processing such that the sound of the speaker objects 53 and 54 may be localized in the positions of the speaker objects 53 and 54, for example (S21). It is to be noted that either the processing of S13 or S21 may be first performed or both may be concurrently performed. In addition, the performer object 51 and the performer object 52 are also objects that emit a sound, so that the processor 12 may perform localization processing such that the sound of each of the performer object 51 and the performer object 52 may be localized in the positions of the performer object 51 and the performer object 52.

The processor 12 performs localization processing based on HRTF (Head Related Transfer Function), for example. The HRTF expresses a transfer function from a virtual sound source position to the right ear and left ear of a user. As shown in FIG. 2 and FIG. 3, the position of the speaker object 53 is on a front left side, as viewed from the first viewpoint position 50A, and the position of the speaker object 54 is on a front right side of the first viewpoint position 50A. The processor 12 performs binaural processing to convolve the HRTF so as to localize at a position on a left side in front of the user, on the audio signal corresponding to the speaker object 53. In addition, the processor 12 performs binaural processing to convolve the HRTF so as to localize at a position on a right side in front of the user, on the audio signal corresponding to the speaker object 54. As a result, the user, while being in the first viewpoint position 50A in the three-dimensional space R1, can perceive a sound as if listening to the sound of the speaker object 53 on the left side and the speaker object 54 on the right side that are in front of the user.

Then, the processor 12, after transforming the coordinates of each object, performs acoustic processing using the second viewpoint position 50B as the listening point (S22). It is to be noted that either the processing of S16 or S22 may be first performed or both may be concurrently performed.

The processor 12 performs the binaural processing to convolve the HRTF so as to localize at a position on the left side in front of the user, on the audio signal corresponding to the speaker object 53. However, the position of the speaker object 53 as viewed from the second viewpoint position 50B in the three-dimensional space R2 is farther to the left side and in a depth direction than the position of the speaker object 53 as viewed from the first viewpoint position 50A in the three-dimensional space R1. Therefore, the processor 12 performs the binaural processing to convolve the HRTF so as to localize the sound of the speaker object 53 at a position far to the left side and in the depth direction. Similarly, the processor 12, on an audio signal corresponding to the speaker object 54, performs the binaural processing to convolve the HRTF so as to localize the sound of the speaker object 54 at a position far to the right side and in the depth direction.

In this manner, while the position of the object changes visually according to the change in the live venue, the localization position of the sound of the object also changes. Therefore, the video processing apparatus 1 according to the present embodiment is able to achieve a visually and auditorily meaningful change in a viewpoint position as a live event.

In addition, the processor 12 may perform acoustic processing using the first viewpoint position 50A and the second viewpoint position 50B as the listening point also in processing to generate the reflected sound in the reverb processing.

The reflected sound in the reverb processing is generated by convolving an impulse response previously measured at an actual live venue, for example, into an audio signal. The processor 12 performs the binaural processing to convolve the HRTF into the audio signal of a live event based on the impulse response previously measured at a live venue and the position of each reflected sound corresponding to the impulse response. The position of the reflected sound in an actual live venue is obtainable by installing a plurality of microphones at listening points of the actual live venue and measuring the impulse response. Alternatively, the reflected sound may be generated based on simulation. The processor 12 may calculate a delay time, level, and arrival direction of the reflected sound, based on the position of a sound source, the position of a wall surface of the live venue based on 3DCAD data, or the like, and the position of the listening point.

The processor 12, in a case in which the live venue is changed, obtains the impulse response according to the changed live venue, performs the binaural processing, and then performs the acoustic processing to generate the reflected sound according to the changed live venue. The change in the live venue also changes the position of each reflected sound in the impulse response. The processor 12 performs the binaural processing to convolve the HRTF into the audio signal of the live event, based on the position of each changed reflected sound.

As a result, while the live venue is visually changed, the reflected sound is also changed to a sound according to the live venue after the change. Therefore, the video processing apparatus 1 according to the present embodiment is able to achieve a visually and auditorily meaningful change in a viewpoint position as a live event and give a new customer experience to the user.

It is to be noted that the reflected sound in the reverb processing includes an early reflected sound and a late reverberant sound. Therefore, the processor 12 may change processing differently on the early reflected sound and the late reverberant sound. For example, the early reflected sound may be generated by simulation and the late reverberant sound may be generated based on the impulse response measured at the live venue.

(Modification 1)

The above embodiment showed a change in the live venue as an example of the second factor being a factor related to the sound of the live event. In Modification 1, the second factor is a factor of a musical change at the live event. The factor of a musical change is a transition, for example, from a state in which all performers are playing or singing to a state of a solo part for a certain performer. Alternatively, the factor of a musical change also includes a transition from a solo part for a certain performer to a solo part for another performer.

In Modification 1, the data related to a live event includes information that shows timing of a musical change and information that shows content of a musical change. The processor 12, based on the information, calculates a relative position to an object and changes the first viewpoint position 50A to the second viewpoint position 50B based on the calculated relative position. For example, in a case in which the data related to a live event includes information that shows transition timing to a guitar solo, the processor 12 calculates a relative position to the performer object 51 and changes the first viewpoint position 50A to the second viewpoint position 50B based on the relative position.

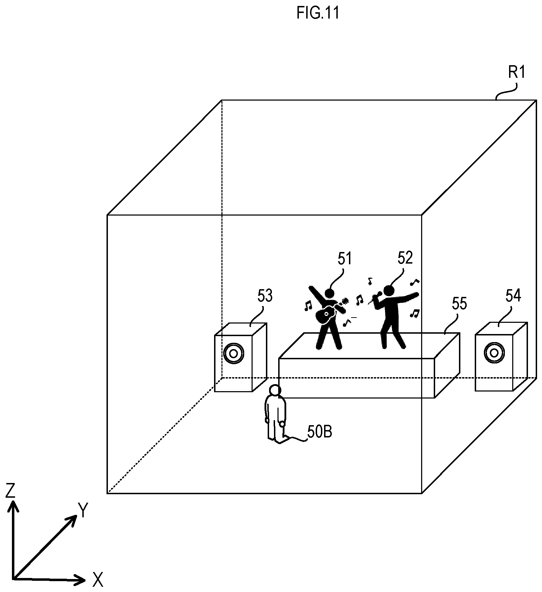

FIG. 11 is a perspective view showing an example of a three-dimensional space R1 according to Modification 1. For example, the processor 12, as shown in FIG. 11, sets the second viewpoint position 50B at the front position away from the performer object 51 by a predetermined distance.

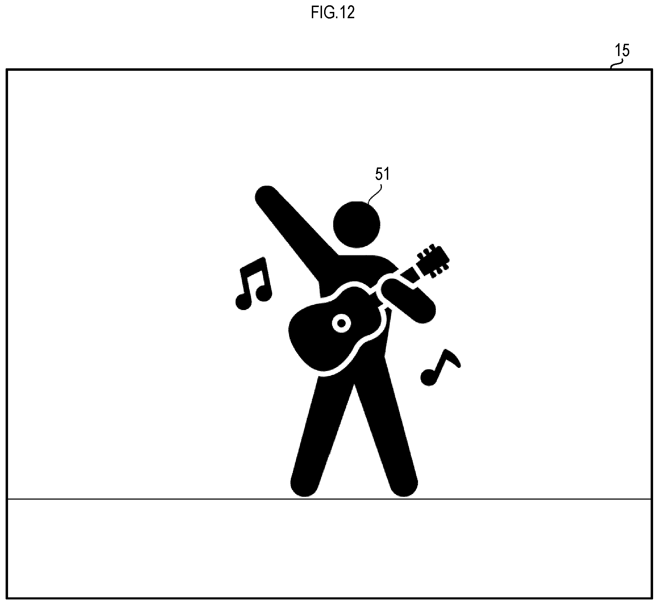

FIG. 12 is a view showing an example of a video of the live event as viewed from the second viewpoint position 50B according to Modification 1. The processor 12 outputs the video of the live event as viewed from the second viewpoint position 50B as shown in FIG. 12. The second viewpoint position 50B is set at the front position away from the performer object 51 by a predetermined distance, so that the video as viewed from the second viewpoint position 50B is a video in which the performer object 51 may be enlarged and captured.

In this manner, the video processing apparatus 1 according to Modification 1, since, at the timing of the transition to a guitar solo, the second viewpoint position 50B is set at the relative position to the performer object 51 of a guitar, in a case in which the factor of a musical change at a live event occurs, such as the transition to a solo part or the like, is able to achieve a meaningful change in the viewpoint position as the live event.

Although the stage object 55 is designated as the first factor in the above embodiment, for example, the processor 12, in the processing of S11 in FIG. 4, may receive a selection of the performer object 52 of a favorite vocal, for example, from a user and may set the first viewpoint position 50A at the relative position of the performer object 51 of the selected vocal. In this manner, even when the user selects a specific object according to preference, in a case in which the factor of a musical change at a live event occurs, such as the transition to a solo part or the like, a meaningful change in the viewpoint position as the live event is able to be achieved.

(Modification 2)

The video processing apparatus 1 of Modification 2 receives an adjustment operation of the first viewpoint position 50A or the second viewpoint position 50B from a user. The processor 12 changes the first viewpoint position 50A or the second viewpoint position 50B according to the received adjustment operation. For example, the processor 12, in a case of receiving an operation of adjusting the height of the second viewpoint position 50B to a high position, changes the second viewpoint position 50B to a high position.

(Modification 3)

The video processing apparatus 1 of Modification 3 records information that shows a viewpoint position as time-series data.

For example, the processor 12, in a case of receiving a selection of the performer object 52 of a favorite vocal from a user in the processing of S11 in FIG. 4, may set the first viewpoint position 50A at the relative position of the performer object 52 of the selected vocal, and may record the first viewpoint position 50A as time-series data.

Alternatively, the processor 12, as with Modification 2, in a case of receiving an adjustment operation of the second viewpoint position 50B from a user, may record the adjusted second viewpoint position 50B as time-series data.

As a result, the user can construct camera work data to which the own adjustment history is further added, at the viewpoint position that changes automatically according to an element related to the sound of a live event. The user can also release the constructed camera work data or can also obtain currently released camera work data of a different user and view, listen to, and enjoy a live event by the camera work data of a different user.

(Modification 4)

In the above embodiment, the first viewpoint position 50A and the second viewpoint position 50B correspond to the position of the user who views and listens to content, in the three-dimensional space. In contrast, in the video processing apparatus 1 of Modification 4, the first viewpoint position 50A and the second viewpoint position 50B are set at a different position from the position of the user who views and listens to content.

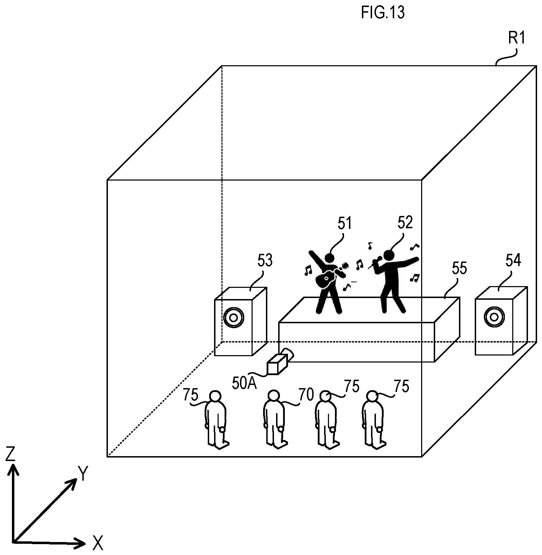

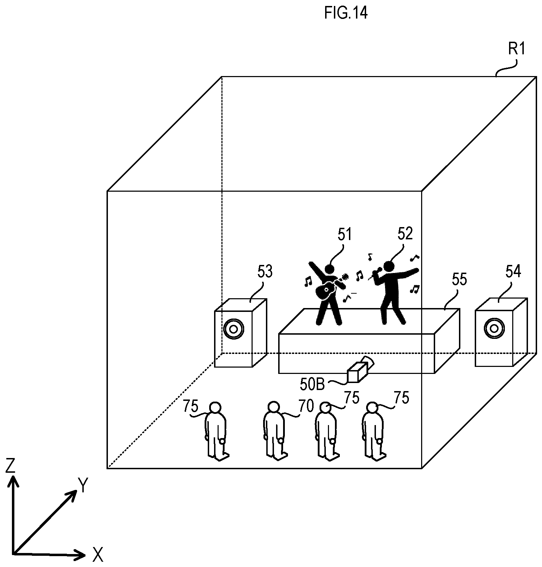

FIG. 13 and FIG. 14 are perspective views showing an example of a three-dimensional space R1 in Modification 4. The video processing apparatus 1 according to Modification 4 receives an operation of designating a user position in the three-dimensional space R1 of the user, from the user. The processor 12 controls an object in the three-dimensional space according to the received user position. Specifically, the processor 12 places a user object 70 at the received user position.

In addition, in this example, the processor 12 obtains information that shows a user position of a different user and places a different user object 75. The user position of the different user is received by the video processing apparatus of each user. The user position of the different user is obtained through a server.

In the example of FIG. 13, the processor 12 receives the selection of the performer object 51 from the user and sets the first viewpoint position 50A at the relative position of the performer object 51 of the selected vocal. For example, when the user performs an operation of changing the position of the first viewpoint position 50A to the rear of the three-dimensional space R1, the processor 12 outputs a video in which the user object 70 or the different user object 75 has been captured.

Herein, as shown in Modification 1, even when the processor 12 sets the second viewpoint position 50B at the relative position to the performer object 51 of a guitar at timing of transition to a guitar solo, the position of the user object 70 or the different user object 75 does not change.

For example, at a live event, a specific event may be completed by a plurality of participants in certain timing. For example, a participatory type event of participants such that a penlight owned by each participant in a live event is turned on in a designated color at a designated position to provide a specific pattern throughout a live venue may be performed.

The video processing apparatus 1 according to Modification 4 may also receive such a participatory type event of participants as a second factor being a factor related to a live event and may change the first viewpoint position to the second viewpoint position according to the second factor. For example, the video processing apparatus 1, in a case in which all users who participate in the live event are placed at designated user positions, sets the second viewpoint position 50B at a position from which the entire live venue is able to be overviewed.

The video processing apparatus 1 according to Modification 4 receives a user position in addition to the first viewpoint position 50A and the second viewpoint position 50B and places the user object 70 and the different user object 75. As a result, in a case in which an event such that a specific pattern is provided throughout a live venue, as described above, is completed, the pattern is also able to be overviewed.

The description of the present embodiments is illustrative in all points and should not be construed to limit the present invention. The scope of the present invention is defined not by the foregoing embodiments but by the following claims. Further, the scope of the present invention includes the scopes of the claims and the scopes of equivalents.

For example, the present embodiment shows a musical live event in which a singer and a guitarist perform, as an example of a live event. However, a live event also includes such an event as a play, a musical, a lecture, a reading, or a game tournament. For example, for an event in the game tournament, a virtual live venue in which a plurality of player objects, a screen object that displays a game screen, a chairperson object, an audience object, a speaker object that emits the sound of a game, and the like are placed is able to be set. In a case in which a user designates the first factor to designate a first player object, the video processing apparatus outputs the video of the live venue in which the first player has been captured. Then, as the second factor related to the live event, in a case in which a second player wins, for example, the video processing apparatus outputs the video in which the second player has been captured. In this manner, the video processing apparatus is also able to achieve a meaningful change in a viewpoint position as a live event, in the other types of events.

Reference Signs List

1: video processing apparatus, 11: communicator, 12: processor, 13: RAM, 14: flash memory, 15: display, 16: user I/F, 17: audio I/F, 20: headphones, 50A: first viewpoint position, 50B: second viewpoint position, 51: performer object, 52: performer object, 53: speaker object, 54: speaker object, 55: stage object, 70: user object, 70A: reference point, 75: different user object, R1: three-dimensional space, R2: three-dimensional space

**Claims**

1.  A video processing method of placing an object in a three-dimensional space and outputting a video of a live event as viewed from a viewpoint position set in the three-dimensional space, the video processing method comprising:

    setting a first viewpoint position based on a first factor being a factor related to the object;
    outputting the video of the live event as viewed from the first viewpoint position;
    receiving a second factor being a factor related to a sound of the live event;
    calculating a relative position to the object according to the second factor, and changing the first viewpoint position to a second viewpoint position based on the calculated relative position; and
    outputting the video of the live event as viewed from the second viewpoint position.

2.  The video processing method according to claim 1, comprising:

    obtaining an audio signal according to the live event; and
    performing acoustic processing using the second viewpoint position as a listening point, on the obtained audio signal.

3.  The video processing method according to claim 2, wherein
    the acoustic processing includes localization processing using the object as a sound source.

4.  The video processing method according to claim 2 or claim 3, wherein
    the acoustic processing includes processing to generate a reflected sound.

5.  The video processing method according to any one of claim 1 to claim 4, wherein
    the second factor includes a change in a live venue in which the live event is performed.

6.  The video processing method according to claim 5, comprising:

    obtaining an audio signal according to the live event;
    performing acoustic processing using the second viewpoint position as a listening point, on the obtained audio signal; and
    performing, in a case in which the live venue is changed, the acoustic processing to generate a reflected sound according to the changed live venue.

7.  The video processing method according to any one of claim 1 to claim 6, wherein
    the second factor includes a factor of a musical change in the live event.

8.  The video processing method according to any one of claim 1 to claim 7, comprising:

    receiving an adjustment operation of the second viewpoint position from a user; and
    changing the second viewpoint position according to the received adjustment operation.

9. The video processing method according to any one of claim 1 to claim 8, comprising
recording the first viewpoint position and the second viewpoint position as time-series data.

10. The video processing method according to any one of claim 1 to claim 9, comprising:

receiving from a user an operation of designating a user position of the user in the three-dimensional space; and
controlling the object in the three-dimensional space according to the received user position.

11. A video processing apparatus comprising a processor that places an object in a three-dimensional space and outputs a video of a live event as viewed from a viewpoint position set in the three-dimensional space, wherein the processor

sets a first viewpoint position based on a first factor being a factor related to the object,
outputs the video of the live event as viewed from the first viewpoint position,
receives a second factor being a factor related to a sound of the live event,
calculates a relative position to the object according to the second factor, and changes the first viewpoint position to a second viewpoint position based on the calculated relative position, and
outputs the video of the live event as viewed from the second viewpoint position.

12. The video processing apparatus according to claim 11, wherein the processor

obtains an audio signal according to the live event, and
performs acoustic processing using the second viewpoint position as a listening point, on the obtained audio signal.

13. The video processing apparatus according to claim 12, wherein
the acoustic processing includes localization processing using the object as a sound source.

14. The video processing apparatus according to claim 12 or claim 13, wherein
the acoustic processing includes processing to generate a reflected sound.

15. The video processing apparatus according to any one of claim 11 to claim 14, wherein
the second factor includes a change in a live venue in which the live event is performed.

16. The video processing apparatus according to claim 15, wherein the processor

obtains an audio signal according to the live event,
performs acoustic processing using the second viewpoint position as a listening point, on the obtained audio signal, and
performs, in a case in which the live venue is changed, the acoustic processing to generate a reflected sound according to the changed live venue.

17. The video processing apparatus according to any one of claim 11 to claim 16, wherein
the second factor includes a factor of a musical change at the live event.

18. The video processing apparatus according to any one of claim 11 to claim 17, wherein the processor

receives an adjustment operation of the second viewpoint position from a user, and
changes the second viewpoint position according to the received adjustment operation.

19. The video processing apparatus according to any one of claim 11 to claim 18, wherein the processor
records the first viewpoint position and the second viewpoint position as time-series data.

20. The video processing apparatus according to any one of claim 11 to claim 19, wherein the processor

receives from a user an operation of designating a user position of the user in the three-dimensional space, and
controls the object in the three-dimensional space according to the received user position.

FIG.1

FIG.2

FIG.3

FIG.4

START

S11
RECEIVE FIRST FACTOR BEING FACTOR RELATED TO OBJECT

S12
SET FIRST VIEWPOINT POSITION BASED ON FIRST FACTOR

S13
OUTPUT VIDEO OF LIVE EVENT AS VIEWED FROM FIRST VIEWPOINT POSITION

S14
RECEIVE SECOND FACTOR?    NO

YES

S15
OBTAIN RELATIVE POSITION TO OBJECT BASED ON SECOND FACTOR AND SET SECOND VIEWPOINT POSITION

S16
OUTPUT VIDEO OF LIVE EVENT AS VIEWED FROM SECOND VIEWPOINT POSITION

END

FIG.5

FIG.6

FIG.7

FIG.8

$$x' = ax + by + c$$
$$y' = dx + ey + f$$

FIG.9

53

$$\begin{cases} x' = x0 + (x1-x0)x + (x3-x0)y + (x0-x1+x2-x3)xy \\ y' = y0 + (y1-y0)x + (y3-y0)y + (y0-y1+y2-y3)xy \end{cases}$$

(x,y)

(x',y')

53

FIG.10

START

S11

RECEIVE FIRST FACTOR

S12

SET FIRST VIEWPOINT POSITION BASED ON FIRST FACTOR

S13

OUTPUT VIDEO OF LIVE EVENT AS VIEWED FROM FIRST VIEWPOINT POSITION

S21

PERFORM ACOUSTIC PROCESSING WITH FIRST VIEWPOINT POSITION AS LISTENING POINT AND OUTPUT

S14

RECEIVE SECOND FACTOR?    NO

YES

S15

OBTAIN RELATIVE POSITION TO OBJECT BASED ON SECOND FACTOR AND SET SECOND VIEWPOINT POSITION

S16

OUTPUT VIDEO OF LIVE EVENT AS VIEWED FROM SECOND VIEWPOINT POSITION

S22

PERFORM ACOUSTIC PROCESSING WITH SECOND VIEWPOINT POSITION AS LISTENING POINT AND OUTPUT

END

FIG.11

FIG.12

FIG.13

FIG.14

## INTERNATIONAL SEARCH REPORT

International application No.

**PCT/JP2023/009400**

| A. | CLASSIFICATION OF SUBJECT MATTER |
|---|---|

*G06T 19/00*(2011.01)i; *G06T 13/20*(2011.01)i; *G06T 13/40*(2011.01)i; *H04S 1/00*(2006.01)i
FI: G06T19/00 A; G06T13/20 500; G06T13/40; H04S1/00 200

According to International Patent Classification (IPC) or to both national classification and IPC

| B. | FIELDS SEARCHED |
|---|---|

Minimum documentation searched (classification system followed by classification symbols)

G06T19/00; G06T13/00-13/80; H04S1/00-7/00; H04N21/00-21/858

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| A | JP 2019-149122 A (SONY CORP.) 05 September 2019 (2019-09-05) paragraphs [0173]-[0191] | 1-20 |
| A | JP 2018-33093 A (NIPPON TELEGR. & TELEPH. CORP.) 01 March 2018 (2018-03-01) paragraphs [0195]-[0202], fig. 16 | 1-20 |
| A | JP 2021-153292 A (YAMAHA CORP.) 30 September 2021 (2021-09-30) fig. 4 | 1-20 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **12 May 2023** | **23 May 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

EP 4 502 957 A1

| INTERNATIONAL SEARCH REPORT<br>Information on patent family members | | | International application No.<br>**PCT/JP2023/009400** |
|---|---|---|---|
| Patent document<br>cited in search report | Publication date<br>(day/month/year) | Patent family member(s) | Publication date<br>(day/month/year) |
| JP 2019-149122 A | 05 September 2019 | US 2021/0092466 A1<br>paragraphs [0202]-[0219]<br>WO 2019/167632 A1<br>CN 111742353 A<br>KR 10-2020-0126367 A | |
| JP 2018-33093 A | 01 March 2018 | (Family: none) | |
| JP 2021-153292 A | 30 September 2021 | US 2021/0306794 A1<br>fig. 4<br>EP 3885894 A2<br>CN 113453126 A | |

Form PCT/ISA/210 (patent family annex) (January 2015)

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2020190978 A